# EUROPEAN PATENT APPLICATION

(11) **EP 4 814 048 A1**
(43) Date of publication of application: **30.09.2026**
(21) Application number: 25167039.4
(22) Date of filing: 28.03.2025
(51) Int. Cl.: C08J 11/08

(54) **ENERGY-EFFICIENT REMOVAL OF CONTAMINANTS FROM POLYOLEFIN-CONTAINING PLASTIC WASTE**

(71) Applicant: Nederlandse Organisatie voor toegepast- natuurwetenschappelijk onderzoek TNO, 2595 DA 's-Gravenhage (NL)
(72) Inventor: VAN DE MOOSDIJK, Johannes Henricus Wilhelmus, 2595 DA 's-Gravenhagen (NL); ROELANDS, Cornelis Petrus Marcus, 2595 DA 's-Gravenhagen (NL); MEIJNSTER, Luuk Hu-Yuan Li, 2595 DA 's-Gravenhagen (NL); VAN GOLEN-KWAKERNAAT, Lauran, 2595 DA 's-Gravenhagen (NL)
(74) Representative: V.O.

(57) **Abstract**

The inventions is directed to a method for removing heteroatom-containing contaminants from polyolefin-containing plastic waste, said method comprising the steps of: i) mixing the polyolefin-containing plastic waste with a solvent to dissolve the polyolefins from the polyolefin-containing plastic waste resulting in a polyolefin solution; and ii) contacting the polyolefin solution with a filter aid powder and conducting a solid-liquid separation resulting in a clean polyolefin solution that comprises the solvent and a polyolefin solute.

## Description

The invention is in the field of plastic waste recycling. In particular, the invention is directed to a method for removing heteroatom-containing contaminants from polyolefin-containing plastic waste.

Plastics typically mainly comprise polymers derived from fossil fuel based petrochemicals. It is generally acknowledged that it is not ideal to use fossil-fuel-based materials and therefore alternatives are sought after. Possible alternatives include synthesizing plastics from renewable materials and/or recycling the plastics. In typical conventional recycling processes, waste is collected and sorted. Sorting generally comprises mechanical sorting first by type of material (e.g. plastics, paper), after which the separate plastics stream is sorted by type of polymer, for instance using infrared spectroscopy. This can for instance result in several mono streams of low-density polyethylene (LDPE), high-density polyethylene (HDPE), polypropylene (PP) and polyethylene terephthalate (PET), and a residual waste stream.

This residual waste stream generally comprises a diversity of polymer types (*i.a.* mixed polyolefins, abbreviated as MPO) that are not easily mechanically separated, as well as other residue materials. The residual waste steam is sometimes also referred to as a crude MPO. The MPO may include for example polystyrenes, polypropylenes and polyethylenes. The MPO is desirably subjected to pyrolysis and/or cracking to extract its heat and/or functional building blocks. However, the crude MPO is generally insufficiently clean for it to be subjected to pyrolysis and/or cracking directly. In particular, the MPO may contain heteroatom-containing contaminants such as high concentrations of chlorine, sulfur and nitrogen. The presence of such heteroatoms may cause operational issues during pyrolysis and/or cracking. For example halogens and sulfur may cause corrosion of reactors and deactivation of catalysts, due to the formation of hydrogen halides and H₂S.

Conventionally, contaminants are removed after pyrolysis and before cracking in a hydrotreatment step, wherein chlorine and other contaminants are removed by hydrogenation. Such a hydrotreatment step, however, is very costly, due to the use of catalyst and the large amount of energy consumed.

Genuino et al. (Fuel Process. Technol. 2022, 233, 107304) describe a process for the pyrolysis of mixed polyolefin waste stream at a laboratory scale and the influence of different washing procedures on feedstock composition and pyrolysis yields. It is described that although much chlorine is removed by washing, the concentration of chloring in the oil/wax after pyrolysis was still too high, *i.e.* more than 150 ppm.

It is further known to remove contaminants from polymer by dissolving the polymers. For instance, EP4074770A1, WO9851717A1 and WO2018068973A1 disclose processes to extract polyolefins from polymer-containing waste by dissolving the polyolefin in a solvent. However, these documents do not disclose that the concentration of heteroatoms can be reduced by this method to make the polyolefin suitable for pyrolysis.

It is an object of the present invention to provide a method for removing contaminants from plastic waste that overcomes at least part of the above-mentioned drawbacks.

Accordingly, in a first aspect, the present invention is directed to a method for removing heteroatom-containing contaminants from polyolefin-containing plastic waste. The present inventors surprisingly found that this can be achieved by selectively dissolving polyolefins from the plastic waste and contacting the resulting polyolefin solution with a filter aid.

Accordingly, the method of the present invention comprises the steps of:
i) mixing the polyolefin-containing plastic waste with a solvent to dissolve the polyolefins from the polyolefin-containing plastic waste resulting in a polyolefin solution;
ii) contacting the polyolefin solution with a filter aid powder and conducting a solid-liquid separation resulting in a clean polyolefin solution comprising the solvent and a polyolefin solute.

The polyolefins dissolved in step i) typically comprise mixed polyolefins (MPO), preferably comprising polyethylene, polypropylene an/or polystyrene.

The plastic waste is typically low-value plastic waste, which may contain non-polyolefinic polymers (such as polyethylene terephthalate (PET), polyvinyl chloride (PVC),polycarbonate (PC) and/or polyamides) and non-polymeric materials (such as paper, cardboard, labels, cork, wood or pigments). Hence, the plastic waste may comprise MPO, more specifically crude MPO and/or clean MPO. The MPO preferably comprises polyethylene, polypropylene and/or polystyrene. It is particularly preferred that the plastic waste comprises or essentially consists of plastic waste according to the DKR-310 and/or DKR-350 standard. The DKR standard is established by the German "Deutsche Gesellschaft für Kreislaufwirtschaft und Rohstoffe mbH (DKR)".

Some of the non-polyolefinic materials can be separated from the polyolefins based on their density in a pretreatment step. The method of the present invention may accordingly further comprise a dry-washing pretreatment step, in which contaminant materials can be separated from the plastic waste based on their density, before dissolving the polyolefins in step i).

Dissolving the plastic waste in a suitable solvent in step i) allows for the selective dissolution of polyolefins and the subsequent removal of non-polyolefinic contaminants.

A suitable solvent for dissolving the polyolefins from the plastic waste may be an alkane, an aromatic hydrocarbon and/or an ether, more preferably an alkane and/or ether. Due to their apolar nature, alkanes, aromatic hydrocarbons or ether solvents are able to selectively dissolve polyolefins, while non-polyolefinic polymers (such as PET, PVC, PC and polyamides) remain primarily undissolved and can be separated. In addition, apolar alkanes, aromatic hydrocarbons and ether solvents have a low viscosity, which is favorable for removing non-soluble materials from the polyolefin solution by filtration, as a solvent with a low viscosity allows for easier filtration. Generally, the viscosity of a solvent is correlated to the boiling point of the solvent, so solvents with low boiling points are particularly preferred. With respect to alkanes, linear or cyclic alkanes comprising 4 to 8 carbon atoms, such as cyclopentane, hexane or butane are preferred, as these alkanes have low boiling points. Cyclopentane is most preferred. With respect to aromatic hydrocarbons, xylene and toluene are preferred, due to their relatively low boiling points compared to other aromatic hydrocarbons.

The plastic waste may comprise a material fraction that this not soluble in the solvent (herein referred to as a non-soluble fraction). Examples of materials in the non-soluble fraction include sand, food scraps, paper and dense plastics such as polyethylene terephthalate (PET), polyvinylchloride (PVC) and polycarbonates (PC). The method of the present invention may accordingly further comprise separating this non-soluble fraction from the first polyolefin solution, preferably before step ii) and preferably by a pre-filtration step. The pre-filtration step may comprise one or more filtration steps, such as a filtration step using a coarse filter, which typically has a pore size in the range of 100-400 µm, to remove the non-soluble fraction with larger particle size. In addition, the pre-filtration step may comprise a filtration step using a fine filter, which typically has a pore size of below 1 µm, to remove the non-soluble fraction with smaller particle size, such as pigments or fillers such as silica or carbon black.

After dissolving the polyolefins in the solvent, the resulting polyolefin solution is contacted with a filter aid powder, followed by separating the filter aid powder and the polyolefin solution in a solid-liquid separation preferably by filtration. This step may comprise first contacting and mixing the polyolefin solution with the filter aid powder, followed by a filtering off the filter aid powder from the polyolefin solution using a conventional filter. Alternatively, or additionally, the polyolefin solution can be passed through a filter onto which a filter aid powder is present, such that the polyolefin solution is effectively passed through the filter and the filter aid powder. Thus, the polyolefin solution may be filtered over a layer of filter aid powder. Alternatively or additionally, the filter aid may be added to the polyolefin solution, after which the resulting suspension may be filtered off. Alternative, or in addition to a filter, other conventionally known solid-liquid separation techniques may be used, such as cyclonic separation, decantation, settling, and the like. Separation by filtration can particularly good results and is accordingly most preferred.

Advantageously, contacting the polyolefin solution with the filter aid powder subsequently separating these again in a solid-liquid separation allows for removing dissolved contaminants in addition to optionally removing any undissolved contaminants.

The filter aid powder was found to be especially suitable for removing dissolved contaminants comprising heteroatoms, such as halogen atoms, in particular chloride, sulfur atoms and/or nitrogen atoms. Plastic waste may contain relatively large amounts of chlorine atoms. Chlorine atoms may be present both as inorganic chloride, i.e. as chlorine salts, such as NaCl, and as organic chloride compounds, such as compounds derived from PVC. Advantageously, the method of the present invention is able to substantially remove both types of chloride.

Accordingly, the method of the present invention is suitable for removing contaminants from the plastic waste comprising concentrations of chlorine above 50 ppm, preferably above 200 ppm, as determined by negative ion chromatography after combustion of a sample or by X-ray fluorescence (XRF). Negative ion chromatography after combustion of a sample and XRF can both be used to determine the concentration of chlorine in a sample and these methods give comparable results. Negative ion chromatography has a lower limit of detection.

The concentration of sulfur in the plastic waste may be above 100 ppm, preferably above 500 ppm, as determined by X-ray fluorescence. The concentration of nitrogen in the plastic waste may be above 3000 ppm, preferably above 5000 ppm, as determined by CHN elemental analysis.

The plastic waste does not necessarily have an upper limit of chlorine, sulfur and/or nitrogen content. However, the present invention is particularly suitable for treating plastic waste having a chlorine, sulfur and/or nitrogen content of less than 50000 ppm, respectively.

The term "filter aid powder" (herein also referred to as "filter aid") as used in the present application refers to a material comprising solid particles that can be used in filtrations, typically in addition to a filter device. This material is generally inert as it does not chemically react with the polyolefin.

The filter aid may comprise a mineral filter aid, cellulose (e.g. nanocellulose) and/or active carbon, preferably a mineral filter aid. The present inventors found that the type of filter aid material, the particle size, the surface area and the porosity may have an influence on the effectiveness of the filter aid to remove the contaminants. Mineral filter aids, in particular mineral filter aids comprising silica and/or alumina are preferred, as these give particularly good results. Accordingly, examples of suitable mineral filter aids are silica, alumina, perlite, bentonite and/or diatomaceous earth. Diatomaceous earth is also known as celite. In addition, filter aids comprising particles with a high surface area are preferred. Accordingly, filter aids with a surface area above 1 m²/g, preferably above 2 m²/g are preferred. The surface area is related to the porosity of the filter aid particles and the particle size of the filter aid particles. Filter aids comprising particles with a high porosity, such as diatomaceous earth are particularly preferred. In general, the porosity of a suitable filter aid, expressed in pore volume, may be above 0.05 cm³/g, preferably above 0.5 cm³/g. The particle size is preferably between 0.1 and 100 µm, preferably between 5 and 40 µm.

The amount of filter aid is preferably not more than an amount sufficient to substantially remove the contaminants from the polyolefin solution. Accordingly, sufficient filter aid is added to create a filter bed with a thickness between 1 and 10 cm, more preferably between 2 and 5 cm thickness. The diameter of the bed should be proportional to the volume of the solution. Accordingly, the amount of filter aid used is preferably between 5 and 30 vol.%, more preferably between 10 and 20 vol.% compared to the volume of the polyolefin solution.

During filtration over the filter aid, a pressure difference may be applied over the filter. The pressure difference may for instance be between 0.1 and 5 bar, preferably between 0.5 and 2 bar.

Additionally, the filtration over the filter aid may typically be performed at standard or elevated temperatures, such as between 15 and 80 °C, preferably between 20 and 50 °C. A higher temperature may advantageously keep the polyolefins more easily dissolved.

It may also be possible to use a scrape filter, that is a filter employed with a scraper blade to continuously remove any build-up of solid material on the upper surface of the filter aid layer.

By removing the contaminants from the polyolefin solution, the filter aid becomes contaminated. This contaminated filter aid can be purified by removing the contaminants, resulting in a regenerated filter aid. Preferably, the contaminated filter aid may is purified by wind-sifting, float sinking and washing with a cleaning solvent, or any combination thereof. The regenerated filter aid may be used again as the filter aid of step ii).

By filtering the polyolefin solution over a filter aid, a clean polyolefin solution with significantly reduced concentrations of heteroatoms can be obtained. In typical embodiments, more than 90%, preferably more than 95%, most preferably more than 99% of the chlorine, sulfur and/or nitrogen atoms respectively can be removed. Specifically, the resulting concentration of chlorine atoms in the clean polyolefin solution may be below 75 ppm, preferably 50 ppm, more preferably below 30 ppm, most preferably below 20 ppm based on the total weight of the polyolefin solute in the solution, as determined by negative ion chromatography after combustion of a sample. In addition, the concentration of sulfur atoms in the clean polyolefin solution may be below 75 ppm, preferably below 50 ppm, more preferably below 30 ppm, most preferably below 10 ppm based on the total weight of the polyolefin solute in the solution, as determined by X-ray fluorescence or inductively coupled plasma atomic emission spectroscopy (ICP-AES). The concentration of nitrogen atoms in the clean polyolefin solution may be below 5000 ppm, preferably below 1000 ppm, more preferably below 100 ppm based on the total weight of the polyolefin solute, as determined by CHN elemental analysis. The concentration of chlorine, sulfur and/or nitrogen atoms in the clean polyolefin solution is determined by precipitating the polyolefin solute and measuring the atom content of the precipitated polyolefin with any of the analytic methods as described above. The polyolefin can for instance be precipitated by mixing the clean polyolefin solution with a large excess of ethanol, after which it is filtered, and the residue (i.e. the polyolefin) is washed with acetone, and dried in a vacuum oven.

Advantageously, the concentration of heteroatoms in the clean polyolefin solution after filtering the polyolefin solution over a filter aid may be reduced to these concentrations regardless of the concentration of heteroatoms in the plastic waste. Thus, the method of the present invention is in particularly useful for removing heteroatoms from plastic waste containing a relatively high concentration of heteroatoms.

The polyolefins from the clean polyolefin solution may be subjected to a pyrolysis process. The clean polyolefin solution may be used directly in the pyrolysis process. Alternatively, the solvent of the clean polyolefin solution may first be switched for a second, preferably less valuable, solvent before pyrolysis. The polyolefins may also first be recovered from the clean polyolefin solution, for example by evaporation of the solvent or by precipitation of the polyolefins, before pyrolysis.

Advantageously, the concentrations of heteroatoms in the pyrolysis product may be such that no or a less energy demanding hydrotreatment step is necessary to further reduced the concentration of heteroatoms before cracking.

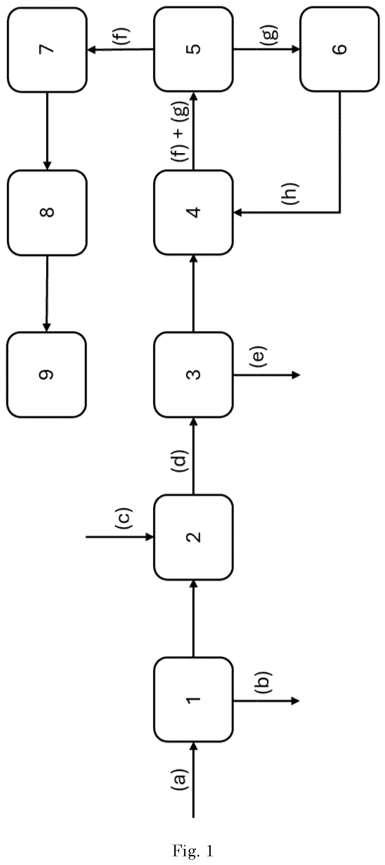

Figure 1 illustrates a particular embodiment of the present invention. The polyolefin-containing plastic waste (a) is first be subjected in the optional pretreatment step (1) to separate non-olefinic materials (b) from the polyolefin-containing plastic waste. The resulting pretreated polyolefin-containing waste is mixed (2) with a solvent (c) to dissolve the polyolefins resulting in a polyolefin solution (d). The polyolefin solution may comprise a non-soluble fraction (e), which can be removed in the optional pre-filtration step (3). In the next stage, the polyolefin solution (from which the non-soluble fraction (e) may optionally be removed) is contacted with the filter aid powder (4) and the subjected to a solid-liquid separation in order to remove the hetero-atom containing contaminants, resulting in a clean polyolefin solution (f) and a contaminated filter aid powder (g). The solid-liquid separation can be carried out in the same step as when the polyolefin solution is contacted with the filter aid powder (*i.e.* in step 4), or it may be carried out separately as shown explicitly in Figure 1 (*i.e.* in step 5). The contaminated filter aid powder (g) can be purified in 6 to regenerate the filter aid powder (h) after which the regenerated filter aid (h) may be recycled to be used as the filter aid powder 4. The clean polyolefin solution (f) is ready for a pyrolysis process (7), which can be followed up by an optional hydrotreatment process (8) and a cracking process (9).

In a second aspect, the present invention is directed to the use of a filter aid powder to remove heteroatom-containing contaminants from said plastic waste. It may be appreciated that the filter aid powder may have the composition and properties, and may be used in a method as described herein above.

As used herein, the term "ppm" (parts per million) refers to the concentration of a given substance, expressed as the number of parts of that substance per one million parts of the reference compound. For example, when describing chloride ion content in a clean polymeric solution, "100 ppm chloride ions based on the polyolefin solute" means 100 parts of chloride ions per one million parts of the polyolefin solute by weight present in the solution. Unless otherwise specified, ppm values are calculated on a weight/weight (w/w) basis.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

For the purpose of clarity and a concise description features are described herein as part of the same or separate embodiments, however, it will be appreciated that the scope of the invention may include embodiments having combinations of all or some of the features described.

The present invention can be illustrated by the following nonlimiting examples.

### Example 1

A dissolution vessel (V1) equipped with a stirrer, and containing a mixture of mixed plastic waste (MPW, DKR 350, 6.2 grams), cyclopentane (100 milliliter), and activated coal (1 gram) was heated to an internal temperature of 100°C. In a filtration vessel (V2) equipped with a metal mesh (pore size 300 µm) in the bottom, a filtration pad is prepared by positioning a filter paper on the mesh and pouring a slurry of diatomaceous earth filter aid (8.0 g) in cyclopentane (100 mL) on top. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Example 2

A dissolution vessel (V1) equipped with a stirrer, and containing a mixture of MPW (DKR 310, 6.0 grams), cyclopentane (100 milliliter), and activated coal (0.6 gram) was heated to an internal temperature of 100 °C. In a filtration vessel (V2) equipped with a metal mesh (pore size 300 µm) in the bottom, a filtration pad is prepared by positioning a filter paper on the mesh and pouring a slurry of diatomaceous earth filter aid (8.0 g) in cyclopentane (100 mL) on top. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Example 3 - hot water pre-treatment

A dissolution vessel (V1) equipped with a stirrer, and containing a mixture of MPW (DKR350 pretreated by a hot water wash at 90 °C, 6.0 grams), cyclopentane (100 milliliter), and activated coal (0.6 gram) was heated to an internal temperature of 100 °C. In a filtration vessel (V2) equipped with a metal mesh (pore size 300 µm) in the bottom, a filtration pad is prepared by positioning a filter paper on the mesh and pouring a slurry of diatomaceous earth filter aid (8.0 g) in cyclopentane (100 mL) on top. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Example 4 -pretreatment

A dissolution vessel (V1) equipped with a stirrer, and containing a mixture of MPW (DKR350 pretreated by washing with water at above 100 °C under pressure, according to the procedure described in WO2023211283A1, 6.0 grams), cyclopentane (100 milliliter), and activated coal (0.7 gram) was heated to an internal temperature of 100 °C. In a filtration vessel (V2) equipped with a metal mesh (pore size 300 µm) in the bottom, a filtration pad is prepared by positioning a filter paper on the mesh and pouring a slurry of diatomaceous earth filter aid (8.0 g) in cyclopentane (100 mL) on top. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Example 5

A dissolution vessel (V1) equipped with a stirrer, and containing a mixture of mixed plastic waste (MPW, DKR 350, 6.2 grams), cyclopentane (100 milliliter), and activated coal (1 gram) was heated to an internal temperature of 100 °C. In a filtration vessel (V2) equipped with a metal mesh (pore size 300 µm) in the bottom, a filtration pad is prepared by positioning a filter paper on the mesh and pouring a slurry of nanocellulose (powder, particle size 20 µm, 16.0 g) in cyclopentane (100 mL) on top. The larger weight, vis-à-vis the weight of diatomaceous earth filter aid in the previous examples, was needed to obtain a filter pad with similar volume. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Example 6

A dissolution vessel (V1) equipped with a stirrer, and containing a mixture of mixed plastic waste (MPW, DKR 350, 6.2 grams), cyclopentane (100 milliliter), and activated coal (1 gram) was heated to an internal temperature of 100 °C. In a filtration vessel (V2) equipped with a metal mesh (pore size 300 µm) in the bottom, a filtration pad is prepared by positioning a filter paper on the mesh and pouring a slurry of bentonite (powder, particle size <25 µm, 32.0 g) in cyclopentane (100 mL) on top. The larger weight, vis-à-vis the weight of diatomaceous earth filter aid in the previous examples, was needed to obtain a filter pad with similar volume. Once the solids had settled, the liquid was drained, taking care to not let the filtration pad run dry. Once the polymer in V1 was dissolved, the reaction mixture was transferred through a pre-filter (perforated metal, 300 µm) to V2. The filtration over the filtration pad was then executed by differential pressure. The filtrate was collected in a pre-heated vessel. Afterwards the system was flushed with 100 mL of pre-heated solvent, and combined with the first filtrate.

### Comparative Example 1

A dissolution vessel (V1) equipped with a stirrer, and containing a mixture of mixed plastic waste (DKR350 pretreated by washing with water at above 100 °C under pressure, 6.0 grams), cyclopentane (100 milliliter), and activated coal (1 gram) was heated to an internal temperature of 100 °C. In a filtration vessel (V2) equipped with a fine metal mesh (pore size 20 µm) in the bottom. Once the polymer in V1 was dissolved, the reaction mixture was transferred through a pre-filter (perforated metal, 300 µm) to V2. The filtration over fine metal mesh filter was then executed by differential pressure. The filtrate was collected in a pre-heated vessel. Afterwards the system was flushed with 100 mL of pre-heated solvent, and combined with the first filtrate.

### Example 7 - Results

To establish the yield of polymer in the polymer solution for each of Examples 1-6 and Comparative Example 1, the polymer was precipitated by adding the polymer solution into a vessel with a large excess of ethanol. The precipitated polymer was then filtered off, washed with acetone, and dried in a vacuum oven. The yield (%) was determined. For examples 1-3, the sample was analyzed by semi-quantitative XRF for sulfur and chlorine. For examples 4-6 and Comparative Example 1, the sample was analyzed by inductively coupled plasma atomic emission spectroscopy (ICP-AES) for sulfur and the concentration of chlorine was determined using combustion and negative ion chromatography. The results are shown in Table 1.

**Table 1**

| | **Yield (%)** | **Conc. Cl (ppm)** | | **Removed** | **Conc. S (ppm)** | | **Removed** |
|---|---|---|---|---|---|---|---|
| | | **before** | **after** | **%** | **before** | **after** | **%** |
| **Example 1** | 44 | 3452 | <20 | >99 | 797 | 20 | 97 |
| **Example 2** | 45 | 3810 | 50 | >99 | 1430 | 20 | 98 |
| **Example 3** | 45 | 3210 | <20 | >99 | 450 | 20 | 95 |
| **Example 4** | 52 | 138 | 13 | 91 | 181 | <10 | >94 |
| **Example 5** | 45 | 3452 | 74 | >99 | 797 | 70 | 91 |
| **Example 6** | 48 | 3452 | 51 | >99 | 797 | 19 | 97 |
| **Comp Ex 1** | 50 | 138 | 110 | 21 | 181 | 58 | 68 |

## Claims

1. A method for removing heteroatom-containing contaminants from polyolefin-containing plastic waste, said method comprising the steps of:
i) mixing the polyolefin-containing plastic waste with a solvent to dissolve the polyolefins from the polyolefin-containing plastic waste resulting in a polyolefin solution;
ii) contacting the polyolefin solution with a filter aid powder and conducting a solid-liquid separation resulting in a clean polyolefin solution that comprises the solvent and a polyolefin solute.

2. The method according to the previous claim, wherein the solid-liquid separation comprises filtration.

3. The method according to any of the previous claims, wherein the polyolefin-containing plastic waste comprises low-value plastic waste comprising non-polyolefinic polymers and/or non-polymeric materials, preferably wherein the plastic waste comprises or essentially consists of plastic waste according to DKR-350 and/or DKR-310 standard.

4. The method according to any of the previous claims, wherein the polyolefins comprise mixed polyolefins (MPO), preferably comprising polyethylene, polypropylene and/or polystyrene.

5. The method according to any of the previous claims, wherein the polyolefin-containing plastic waste comprises:
- chlorine atoms in a concentration of above 50, preferably above 200 ppm, based on the total weight of the polyolefin-containing plastic waste;
- sulfur atoms in a concentration of a concentration of above 100 ppm, preferably above 500 ppm, based on the total weight of the polyolefin-containing plastic waste; and/or
- nitrogen atoms in a concentration of a concentration of above 3000, preferably above 5000 ppm, based on the total weight of the polyolefin-containing plastic waste.

6. The method according to any of the previous claims, wherein the solvent comprises an alkane, an aromatic hydrocarbon and/or an ether, preferably an alkane and/or aromatic hydrocarbon, more preferably cyclopentane, xylene and/or toluene, even more preferably cyclopentane.

7. The method according to any of the previous claims, wherein the concentration of chlorine atoms in the clean polyolefin solution is below 75 ppm, preferably below 50 ppm, more preferably below 30 ppm, based on the total weight of the polyolefin solute, as determined by precipitating the polyolefin solute and measuring the chlorine atom content of the precipitated polyolefin.

8. The method according to any of the previous claims, wherein the concentration of sulfur atoms in the clean polyolefin solution is below 75 ppm, preferably below 50 ppm, most preferably below 30 ppm, most preferably below 10 ppm, based on the total weight of the polyolefin solute, as determined by precipitating the polyolefin solute and measuring the sulfur atom content of the precipitated polyolefin.

9. The method according to any of the previous claims, wherein the concentration of nitrogen atoms in the clean polyolefin solution is below 5000 ppm, preferably below 1000 ppm, more preferably below 100 ppm, based on the total weight of the polyolefin solute, as determined by precipitating the polyolefin solute and measuring the nitrogen atom content of the precipitated polyolefin.

10. The method according to any of the previous claims, wherein the filter aid powder comprises a mineral filter aid, cellulose and/or carbon black.

11. The method according to any of the previous claims, wherein the filter aid powder comprises a mineral filter aid and wherein the mineral comprises silica and/or alumina, preferably wherein the mineral filter aid comprises silica, alumina, diatomaceous earth and/or perlite, more preferably diatomaceous earth.

12. The method according to any of the previous claims, wherein the filter aid powder has a surface area above 1 m²/g, preferably above 2m²/g and/or wherein the filter aid powder has a pore volume above 0.05 cm³/g, preferably above 0.5 cm³/g and/or wherein the filter aid powder has a particle size between 0.1 and 100 µm, preferably between 5 and 40 µm.

13. The method according to any of the previous claims, wherein the filter aid powder is used in an amount of between 5 and 30 vol.%, preferably 10 and 20 vol.% compared to the volume of the polyolefin solution.

14. The method according to any of the previous claims, wherein the solid-liquid separation produces the clean polyolefin solution and a contaminated filter aid powder, and wherein said method further comprises purifying the contaminated filter aid powder resulting in a regenerated filter aid, using a process comprising wind-sifting, float sinking, washing with a cleaning solvent, or any combination thereof.

15. The method according to any of the previous claims, wherein the method further comprises one or more steps of:
- a pre-treatment comprising dry-washing the mixed plastic waste before step i) to remove solids from the mixed plastic waste, and
- a pre-filtration comprising filtering the polyolefin solution over a coarse filter before step ii) to remove a non-soluble fraction from the plastic waste.

16. The method according to any of the previous claims, wherein the method further comprises a step of subjecting at least the polyolefin solute of the clean polyolefin solution to a pyrolysis process.

17. Use of a filter aid powder, preferably in the method according to any of the previous claims, to remove heteroatom-containing contaminants from polyolefin-containing plastic waste.
